# FASCICULE DE BREVET EUROPEEN

(11) **EP 2 435 533 B1**
(45) Date de publication et mention de la délivrance du brevet: **13.02.2013**
(21) Numéro de dépôt: 10723652.3
(22) Date de dépôt: 25.05.2010
(51) Int. Cl.: C10B 49/16, C10B 49/18, C10B 53/02, F23G 5/027

(54) **NOUVEAU PROCEDE POUR LA GAZEIFICATION DE DECHETS ORGANIQUES**
NEUARTIGES VERFAHREN ZUR PYROVERGASUNG VON BIOMÜLL
NOVEL METHOD FOR PYROGASIFICATION OF ORGANIC WASTE

(30) Priorité: 25.05.2009 FR 0902500
(43) Date de publication de la demande: 04.04.2012
(73) Titulaire: Hustache, François, 78570 Andresy (FR); Chantelat, Alain, 91210 Draveil (FR); Point, Jacques, 1227 Carouge (CH)
(72) Inventeur: HUSTACHE, François, 78570 Andresy (FR); CHANTELAT, Alain, 91210 Draveil (FR)
(74) Mandataire: Gallochat, Alain
(86) Numéro de dépôt international: PCT/FR2010/000388
(87) Numéro de publication internationale: WO 2010/136669

(56) Documents cités:
- FR-A1- 2 858 570
- US-A- 1 712 082
- US-A- 2 494 695
- US-A- 3 034 979
- US-A- 4 421 629

## Description

L'invention concerne un nouveau procédé pour la pyrogazéification de déchets organiques.

La pyrogazéification est un procédé de traitement et de valorisation énergétique des matières organiques.

Dans la présente description, on entend par « matières organiques » ou par « déchets organiques » les matières comprises dans les déchets, ainsi que dans les produits et coproduits issus de l'agriculture ou de la biomasse.

La valorisation énergétique des déchets ou de la biomasse constitue aujourd'hui un enjeu majeur, dans la mesure où elle contribue à lutter efficacement contre l'effet de serre et contre la future pénurie de combustibles fossiles.

Le procédé selon l'invention utilise la pyrogazéification des matières organiques.

Pour valoriser énergétiquement les matières organiques, il existe plusieurs voies :
- l'incinération, procédé bien connu, largement utilisé, critiqué aujourd'hui pour ses coûts d'installation et surtout pour son lourd traitement des fumées (dioxines, furanes, métaux lourds etc.) ;
- la méthanisation qui n'est pas à proprement parler un procédé concurrent de la pyrogazéification car elle s'adresse à des produits exclusivement humides.

La pyrolyse consiste en une décomposition de la matière organique par la chaleur (de 500 à 1100 °C) à l'abri de l'oxygène, donc de l'air. Les produits de cette décomposition sont des gaz incondensables (CO, H₂, CO₂), des hydrocarbures incondensables (CH₄, C₂H₆, C₃H₈, C₄H₁₀), des hydrocarbures lourds, des goudrons condensables en huiles, de l'eau (H₂O) et du coke (carbone). Les proportions de ces composants dépendent des conditions de la réaction de pyrolyse.

Si la réaction est menée à basse température (400 à 500 °C) et à temps de séjour long (dizaines de minutes) le coke sera le produit majoritaire de cette décomposition de la matière organique.

Si la réaction est menée à haute température (700 à 1000 °C) avec hausse rapide de température et à temps de séjour rapide (quelques secondes ou quelques minutes) le produit majoritaire sera un gaz combustible.

Dans ces deux réactions, le gaz produit est composé, comme précédemment indiqué, de gaz incondensables (CO, H₂, CO₂), d'hydrocarbures incondensables (CH₄, C₂H₆, C₃H₈, C₄H₁₀), les autres composés produits lors de ces réactions étant des hydrocarbures lourds, des goudrons condensables en huiles et de l'eau (H₂O) sous forme de vapeur condensable.

L'élimination de ces goudrons pour former un gaz de synthèse (CO + H₂) ayant une teneur en goudron inférieure à 0,1 mg/m³ (afin que ce gaz puisse être valorisé dans un groupe électrogène fonctionnant avec un moteur à gaz pauvre) est l'enjeu essentiel car la production d'électricité est une des principales voies de valorisation de la biomasse et des déchets organiques. La valorisation par groupe électrogène avec moteur thermique va doubler, au minimum, la production d'électricité par rapport aux génératrices actionnées par des turbines à vapeur ou bien utilisant le cycle organique de Rankine (ORC).

Les procédés actuels fournissent un gaz qui ne peut être valorisé que par des brûleurs donc en utilisant des procédés à vapeur ou ORC.

Les procédés actuellement utilisés pour réaliser une pyrolyse sont principalement les suivants :
- selon un premier procédé, le chauffage de la matière est réalisé au sein d'une enveloppe étanche (four) par l'intermédiaire d'une double enveloppe dans laquelle circulent les gaz de combustion d'un brûleur. Ce procédé nécessite, en raison de son mauvais échange de chaleur (uniquement par les parois), des surfaces et un volume très importants. Il est intéressant pour des réactions menées à basses températures (400 à 500 °C) et lentes. L'inconvénient de ce procédé réside dans le fait que la température et le mélange des matières sont mal maîtrisés et que la production ne peut être orientée que vers la production de gaz ou d'huile selon les choix ou impératifs de l'utilisateur. Seule une valorisation des gaz par brûleur peut être envisagée. La quantité importante de coke, qui est pour certaines matières pyrolysées un déchet, est aussi un élément négatif pour le procédé ;
- selon un autre procédé, on utilise le chauffage direct des matières à pyrolyser par les gaz chauds dégagés par une flamme. Dans ce procédé le transfert thermique est meilleur mais la combustion dans la même enceinte que la réaction de pyrolyse induit un apport d'oxygène important (excès d'air de combustion) qui nuit à la qualité des gaz des rejets (possibilité de produits chlorés) et qui en outre nuit à la production d'énergie.

Il existe d'autres procédés pour transférer l'énergie à la matière à pyrolyser, utilisant des tubes chauffants, des lits fluidisés, des projections ou pulvérisations des matières sur des réacteurs à haute température. Ces principes sont soit fragiles soit techniquement difficiles à industrialiser.

On citera plus particulièrement dans cette catégorie un procédé utilisant des billes d'acier chauffées à l'extérieur du four pour ensuite, par un système de sas, être introduites dans le four afin d'être mélangées avec la matière à pyrolyser dans un four horizontal ou légèrement incliné. Un tel procédé est décrit dans les demandes de brevet internationales WO 2005/018841 et WO 2006087310; ce procédé est performant car il permet une parfaite maîtrise du temps de séjour par le contrôle de la vitesse de rotation du four et une maîtrise de la température par le contrôle de la température des billes. En revanche le fait que le système utilise un four horizontal et que le mélange billes / matières soit propulsé par une vis d'Archimède ou par un four tournant oblige à ne remplir avec ledit mélange qu'environ 1/3 du four dans le sens de la longueur. Ce procédé, dans la mesure où le gaz de pyrolyse est produit dès la mise en contact des billes et des matières, lors de leur introduction, ne permet pas de réaliser un craquage suffisant des gaz condensables et des goudrons car après leur production et jusqu'à leur extraction, ces gaz ne sont plus en contact qu'avec le lit de billes chaudes et de matières résiduelles. Cette surface de contact réduite rend le craquage faible et incomplet. Un autre inconvénient de ce procédé consiste en ce que les billes, lorsqu'elles se présentent sous forme de paquets, ont tendance à s'agglomérer, surtout à haute température, et deviennent alors de manipulation de transport difficile. Cette remarque est particulièrement applicable au second brevet (WO 200608710) où les billes référencées 40 dans des cônes ou des entonnoirs ne circulent pas ou ne circulent que très difficilement. US 1,712,082 décrit un procédé pour la pyro gazéification de matériaux organiques, comprenant un four approprié pour effectuer la pyrolyse desdits déchets mélangés à des billes portées à haute température et un four permettant le réchauffage desdites billes métalliques en vue d'un nouveau cycle de pyro gazéification.

La présente invention, tenant compte de toutes ces difficultés, remédie aux problèmes en utilisant comme masses métalliques, des tores en acier inoxydable haute température.

A titre préférentiel, ces tores seront réalisés en un alliage contenant du nickel et du cobalt afin de favoriser la catalyse au moment du craquage.

La présente invention sera mieux comprise à la lecture de la description faite au regard des figures parmi lesquelles :
- la figure 1 représente schématiquement le dispositif mettant en oeuvre le procédé de pyrogazéification selon l'invention, et
- la figure 2 représente un détail d'une variante d'exécution dudit dispositif.

Ces tores cheminent dans le même sens que les matières à pyrolyser dans un four vertical statique.

Le choix de tores à la place de billes est essentiel dans la présente invention ; en effet, les tores vont présenter le plus grand rapport surface d'échange / poids, ce qui est important car cela permet d'avoir le meilleur rendement possible tant à la chauffe des tores dans le four de chauffage qu'à la restitution et au transfert de cette énergie à la matière à pyrolyser. A titre d'exemple, si l'on prend une bille classique en acier réfractaire, c'est-à-dire une forme sphérique d'un diamètre de 40 mm, son poids est de 261,4 grammes et sa surface d'échange de 5026,55 mm². Pour un poids sensiblement équivalent de 262 grammes, il sera possible d'utiliser un tore de 60 mm de diamètre extérieur et de 24 mm de diamètre intérieur, ce qui lui procure une section de 18 mm. La surface d'échange de ce tore sera de 7461,42 mm². Le rapport surface d'échange tore / sphère pour un poids d'acier équivalent sera donc de l'ordre de 1,5. La rapidité de chauffe et de transfert thermique sera donc améliorée par rapport aux procédés existants.

D'autres dimensions sont envisageables au niveau des tores (2), mais il est apparu que les meilleurs résultats étaient obtenus pour un diamètre intérieur compris entre 15 et 100 mm, et un diamètre extérieur compris entre 50 et 150 mm.

En outre, le fait d'utiliser des tores plutôt que des billes va présenter un avantage important en ce qui concerne la circulation du caloporteur (à savoir les masses métalliques apportant la chaleur aux matières à pyrolyser). En effet, contrairement aux billes qui ont tendance à s'agglomérer ainsi que cela a déjà été mentionné, rendant leur circulation difficile, les tores ne s'auto-bloquent pas et leur circulation est grandement facilitée, améliorant encore le rendement du procédé selon l'invention.

La présente invention permet de traiter tous les produits comprenant de la matière organique qu'ils soient issus de la biomasse et donc considérés comme énergie renouvelable, ou bien non issus de la biomasse.

A titre d'exemples non limitatifs de produits issus de la biomasse, on pourra citer les produits suivants :
- bois, déchets de bois et sciures de bois,
- paille,
- déchets viticoles,
- coproduits et déchets de l'agriculture (fientes, lisiers, mélasses, farines animales),
- bagasse,
- cultures énergétiques (miscanthus etc.),
- boues d'épuration d'eau,
- liqueurs de papeterie,
- papiers, cartons, cellulose,
- ordures ménagères,
- déchets industriels solides.

S'agissant de produits non issus de la biomasse, on pourra citer à titre d'exemples non limitatifs les produits suivants :
- déchets de houille et de charbon,
- déchets pétroliers,
- déchets de bois pollués,
- déchets de la chimie organique,
- déchets de peinture,
- déchets de plastiques (polyéthylène, polystyrène, polyuréthane, PVC),
- pneus usagés.

Cette liste n'est pas limitative, toute matière contenant de la matière organique peut être traitée par le procédé selon l'invention, que ce soit pour une valorisation thermique, pour une destruction ou pour une dépollution.

Les matières traitées par le procédé selon l'invention peuvent être sous forme solide, pâteuse ou liquide. Les produits solides doivent être préalablement broyés pour obtenir des éléments d'une dimension voisine de 50 mm.

Les produits traités par le procédé selon l'invention peuvent contenir une quantité importante (de 30 à 100%) de matière organique et, dans ce cas, la réaction est soit autonome en énergie pour la destruction du déchet soit excédentaire en énergie et productrice d'électricité et d'énergie sous forme de vapeur ou d'eau chaude. Les produits traités peuvent aussi être des matières polluées comprenant peu de matière organique. Dans ce cas, le procédé peut être utilisé pour dépolluer, par exemple des terres polluées en utilisant une autre énergie pour activer la réaction de pyrolyse (biogaz de centre d'enfouissement ou de station de traitement d'eau ou de méthanisation éventuellement de l'énergie fossile).

Le procédé selon l'invention permet de réaliser la pyrolyse et la gazéification de matières organiques pour des quantités comprises entre 50 et 10 000 tonnes par an. Pour des quantités supérieures, il est souhaitable de mettre plusieurs unités en parallèle.

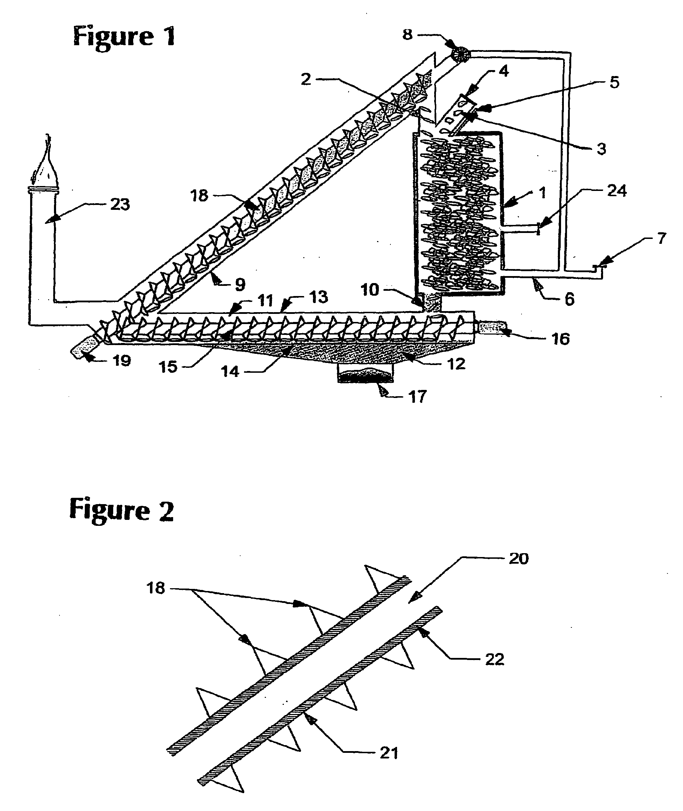

Référence est maintenant faite à la figure 1 où est représenté un four (1) qui est une enceinte verticale d'un volume réduit (1,5 m3 pour un traitement d'une tonne/heure, soit une hauteur d'environ 2,5 m), la pyrolyse se déroulant à l'intérieur de ce dernier. Contrairement aux dispositifs existants, ce four où a lieu la pyrogazéification est plein du mélange constitué de tores (2) à haute température (500 à 1100 °C selon les besoins) et des matières organiques (3) à pyrolyser; la proportion entre les tores (2) et les matières à pyrolyser (3) sera déterminée de façon à avoir la meilleure réaction de pyrogazéification. Les matières organiques (3) sont introduites soit grâce au sas (4) lorsqu'elles sont solides, ce qui est le cas dans la représentation de la figure 1, soit au travers d'un sas (5) lorsqu'elles sont liquides. Un dispositif de brassage des tores (2) et des matières organiques (3), non représenté ici, est prévu à l'intérieur du four (1) permettant un mélange intime entre lesdits tores (2) et lesdites matières organiques (3), améliorant ainsi la pyrolyse de ces dernières. La réaction est très rapide et le gaz de pyrolyse comprenant incondensables et hydrocarbures condensables ainsi que le coke sont produits dès l'introduction des matières (3) dans le four (1). L'intérêt du cheminement du mélange tores (2) / matières organiques (3) sur la hauteur du four (1) à haute température consiste en ce que le craquage des hydrocarbures à haute température et la gazéification du coke résiduel se réalisent pendant ce parcours grâce au contact intime avec la très grande surface d'échange des tores (2) surchauffés et des matières organiques (3). A titre préférentiel, et afin d'améliorer encore cette réaction, on choisira des tores en acier inoxydable à haute température en alliage comportant du nickel et du cobalt, ce qui a pour effet d'améliorer la gazéification par effet catalytique, une telle composition au niveau des tores facilitant le craquage des goudrons. Cette réaction peut aussi être améliorée par apport de CO₂ ou de vapeur d'eau en cours de parcours du mélange ce qui à pour fonction de gazéifier en CO et H₂ les particules carbonées résiduelles.

Le parcours du mélange précité s'achève dans le bas du four (1) où les gaz sont extraits au niveau d'une sortie (6) dotée d'un système d'aspiration réglable, non représenté ici, ce qui à pour effet de mettre le four (1) en très légère dépression. Le fait que la sortie (6) soit située en partie basse du four (1) est préférée car elle permet aux matières (3) d'être pyrolysées un maximum de temps, puisque sur un trajet maximal, améliorant ainsi les résultats de ladite pyrolyse. Ces gaz sont ensuite conduits soit directement vers une valorisation thermique (brûleur et chaudière, non représentés ici), soit refroidis et lavés afin d'être valorisés de manière optimale dans un groupe électrogène (7).

Un brûleur (8) est prévu pour réchauffer les tores (2) à l'intérieur d'un four de réchauffage (9) ainsi qu'il sera expliqué plus avant dans la description, étant entendu qu'une partie de ces gaz de combustion, variant de 10% jusqu'à 100% (en cas de destruction d'une matière à pyrolyser ayant un faible pourcentage de produits organiques), est orientée vers le four (9) de réchauffage des tores (2), la température la plus élevée se situant dans la partie supérieure de ce four (9), permettant ainsi l'introduction des tores (2) dans le four (1) à une température maximale.

Les tores (2) ainsi que les particules pyrolysées solides sont récupérés sous le four par un système de réglage de débit (10) qui permet de régler la vitesse de circulation du mélange tores (2) / matières organiques (3) dans le four (1). Ensuite ce mélange est introduit dans un séparateur (11) qui va permettre de séparer les tores (2) et les résidus pyrolysés, c'est-à-dire les matières minérales (12) formées desdites particules pyrolysées solides ; ce séparateur (11) est constitué d'un cylindre (13) avec un tamis inférieur (14) et, dans la mesure où il reçoit des produits à haute température (entre 400 et 700 °C), est réalisé en acier réfractaire. Dans ce cylindre (13), le mélange tores (2) / matières minérales (12), ces dernières comportant éventuellement des métaux, est poussé par une vis d'Archimède (15) actionnée par un motoréducteur (16) ; au fur et à mesure que ledit mélange avance les particules minérales (12) dont la taille est très inférieure à celle des tores (2) sont extraites grâce au tamis (14), disposé préférentiellement sur la plus grande partie de la vis (15), et récupérées dans un réceptacle (17) conçu de façon à évacuer lesdites particules et muni d'un sas afin de ne pas laisser entrer l'air dans le dispositif selon l'invention lors de cette évacuation. Les particules seront donc évacuées afin d'être soit valorisées soit traitées selon le classement « déchet » ou non du produit pyrogazéifié.

A la fin du parcours dans ce séparateur (11), la séparation entre les tores (2) et les matières minérales (12) est totale et seuls les tores (2) sont acheminés vers le four de réchauffage (9). Ce four (9) a pour fonction de chauffer les tores (2) à la température nécessaire déterminée pour réaliser la réaction de pyrolyse dans le four de pyrogazéification (1), éventuellement dans le cadre d'un cycle continu. Il a aussi pour autre fonction d'élever les tores (2) afin de les amener du séparateur (11) à un niveau supérieur au sommet du four de pyrogazéification (1). Le déplacement des tores (2) dans le four (9) de chauffage est assuré par une vis d'Archimède (18), comme dans le séparateur (11). La rotation de la vis (18) est obtenue à l'aide d'un motoréducteur (19) qui anime un arbre, l'ensemble étant incliné suivant l'importance de l'élévation à effectuer entre le séparateur (11) et le four (1). Le chauffage des tores (2) se fait directement par contact avec les gaz de combustion du brûleur (8) ce qui nécessite afin de ne pas introduire d'oxygène, qui est faiblement présent dans les gaz de combustion, de réguler les extracteurs et débits de fumées, non représentés ici, afin de créer un point de pression neutre entre le four de réchauffage (9) et le four de pyrogazéification (1). Ce four de réchauffage (9) qui doit supporter des températures pouvant atteindre 1100 °C est réalisé en acier réfractaire haute température. D'autre part à ces températures, la dilatation des métaux est très importante et l'agencement de ce four fait l'objet d'une variante préférentielle d'exécution qui apparaît mieux à la figure 2.

Dans la variante illustrée à cette figure 2, les volutes de la vis (18) ne sont pas directement fixées sur l'arbre (20) qui en assure la rotation, mais sur un manchon (21) entourant l'arbre (20) ; selon la variante illustrée à la figure 2, ce manchon est creux et rempli d'une matière isolante (22), mais selon une autre variante, le manchon est lui-même réalisé en un matériau thermiquement isolant. Quelle que soit la variante, la présence du manchon (21) limite de façon considérable la transmission de chaleur à l'arbre (20) et permet ainsi de conserver audit arbre (20) ses caractéristiques mécaniques initiales. L'arbre (20) ainsi protégé peut être sans risque refroidi au niveau de paliers, non représentés ici.

Les gaz de combustion à haute température (1000° C) sont évacués après contrôle de la conformité aux normes de rejet et refroidissement sur un échangeur classique afin de valoriser l'énergie qu'ils contiennent (par exemple pour sécher les produits à pyrolyser).

Dans une variante d'exécution non illustrée ici, il est également possible de prévoir une récupération des gaz de combustion à haute température (1000° C), lesdits gaz étant acheminés dans la double enveloppe dont est alors doté le four de pyrogazéification (1) afin de récupérer le maximum d'énergie pour le craquage des hydrocarbures et des goudrons dans le cas d'une valorisation thermique ou électrique après quoi ces gaz sont comme précédemment indiqué évacués après contrôle de la conformité aux normes de rejet et refroidissement sur un échangeur classique.

Les tores (2) chauffés à la température requise sont introduits au débit nécessaire en fonction de la quantité et de la qualité de la matière à pyrogazéifier dans le four (1). Les matières organiques à traiter sont introduites à un débit régulé par l'intermédiaire d'un système de sas afin de ne pas introduire d'oxygène.

S'agissant de l'architecture générale du dispositif selon l'invention, la figure 1 illustre un mode préférentiel, réduisant l'encombrement et permettant une mise oeuvre optimale du procédé selon l'invention ; c'est ainsi que les trois éléments essentiels dudit dispositif, à savoir le four de pyrogazéification (1), le système de séparation (11) et le four de réchauffage (9) sont répartis selon un triangle rectangle dont les deux côtés de l'angle droit correspondraient respectivement au four (1), préférentiellement vertical, et au système (11) sensiblement horizontal, le four (9) occupant alors la place de l'hypoténuse. Selon une variante, le système (11) pourrait être légèrement incliné, l'angle droit du triangle précédemment décrit étant alors légèrement obtus.

## Revendications

1. Procédé pour la pyrogazéification de déchets organiques, du type utilisant a) un four où s'effectue la pyrolyse desdits déchets mélangés à des masses métalliques portées à haute température, à savoir entre 500°C et 1100°C, ledit four comportant une entrée pour lesdits déchets et pour lesdites masses métalliques ainsi qu'une sortie pour les gaz de pyrolyse, b) un système séparant les résidus pyrolysés et lesdites masses métalliques, c) un four permettant le réchauffage desdites masses métalliques en vue d'un nouveau cycle de pyrogazéification, **caractérisé en ce que** lesdites masses métalliques sont composées de tores (2) réalisés en acier inoxydable.

2. Procédé selon la revendication 1 **caractérisé en ce que** lesdits tores (2) contiennent du nickel et du cobalt.

3. Procédé selon l'une des revendications 1 ou 2 **caractérisé en ce que** lesdits tores (2) ont un diamètre intérieur compris entre 15 et 100 mm, et un diamètre extérieur compris entre 50 et 150 mm.

4. Procédé selon l'une quelconque des revendications 1 à 3 **caractérisé en ce que** la sortie (6) des gaz de pyrolyse est prévue à la partie inférieure du four (1) où s'effectue ladite pyrolyse.

5. Procédé selon la revendication 4 **caractérisé en ce que** ladite sortie (6) est munie d'un système mettant l'intérieur dudit four (1) en légère dépressions.

6. Procédé selon l'une quelconque des revendications 1 à 5 **caractérisé en ce qu'**à la base du four (1) où s'effectue ladite pyrolyse est prévu un dispositif (10) régulant le débit de sortie des tores (2) et des résidus de pyrolyse.

7. Procédé selon l'une quelconque des revendications 1 à 6 **caractérisé en ce que** le système (11) séparant les résidus pyrolysés et lesdits tores (2) comporte une vis d'Archimède (15) entraînant lesdits résidus et lesdits tores (2) depuis la base du four (1) jusqu'à la base du four (9) permettant le réchauffage desdits tores (2), lesdits résidus pyrolysés étant entre temps récupérés dans un réceptacle (17) en passant au travers d'un tamis (14) disposé sous ladite vis (15) et sur une longueur substantielle de cette dernière.

8. Procédé selon l'une quelconque des revendications 1 à 7 **caractérisé en ce que** le four (9) permettant le réchauffage desdits tores (2) est muni d'un brûleur (8) et d'une vis d'Archimède (18) permettant de ramener lesdits tores (2) réchauffés à l'aide du dit brûleur (8) à un niveau supérieur au sommet du four (1).

9. Procédé selon la revendication 8 **caractérisé en ce que** les volutes de ladite vis (18) sont séparées de l'arbre (20) entraînant ladite vis (18) par un manchon (21) isolant thermiquement ledit arbre (20) des volutes de ladite vis (18).

10. Procédé selon l'une quelconque des revendications 1 à 9 **caractérisé en ce que** ledit four (1), ledit système de séparation (11) et ledit four (9) constituent respectivement les côtés d'un angle droit d'un triangle rectangle et son bypoténuse, ledit four (1) étant vertical.

## Claims

1. A method for pyrogasification of organic wastes, of the type using a) a furnace where pyrolysis of said wastes mixed with metal masses brought to a high temperature, i.e. between 500°C and 1,100°C is carried out, said furnace, including an inlet for said wastes and for said metal masses as well as an outlet for the pyrolysis gases, b) a system separating the pyrolyzed residues and said metal masses, c) a furnace for reheating up said metal masses with view to a new pyrogasification cycle, **characterized in that** said metal masses consist of toruses (2) made in stainless steel.

2. The method according to claim 1, **characterized in that** said toruses (2) contain nickel and cobalt.

3. The method according to one of claims 1 or 2, **characterized in that** said toruses (2) have an inner diameter comprised between 15 and 100 mm, and an outer diameter comprised between 50 and 150 mm.

4. The method according to any of claims 1 to 3, **characterized in that** the outlet (6) of the pyrolysis gases is provided at the lower portion of the furnace (1) where said pyrolysis is carried out.

5. The method according to claim 4, **characterized in that** said outlet (6) is provided with a system slightly depressurizing the inside of said furnace (1).

6. The method according to any of claims 1 to 5, **characterized in that** at the base of the furnace (1) where said pyrolysis is carried out, a device (10) regulating the outlet flow rate of the toruses (2) and of the pyrolysis residues is provided.

7. The method according to any of claims 1 to 6, **characterized in that** the system (11) separating the pyrolyzed residues and said toruses (2) includes an Archimedes screw (15) carrying away said residues and said toruses (2) from the base of the furnace (1) to the base of the furnace (9) allowing the reheating up of said toruses (2), said pyrolyzed residues being meanwhile recovered in a receptacle (17) by passing through a sieve (14) placed under said screw (15) and over a substantial length of the latter.

8. The method according to any of claims 1 to 7, **characterized in that** the furnace (9) allowing the reheating up of said toruses (2), is provided with a burner (8) and an Archimedes screw (18) allowing said toruses (2), re-heated up with said burner (8), to be brought to a higher level at the top of the furnace (1).

9. The method according to claim 8, **characterized in that** the volutes of said screw (18) are separate from the shaft (20) driving said screw (18) by a sleeve (21) firm only insulating said shaft (20) from the volutes of said screw (18).

10. The method according to any of claims 1 to 9, **characterized in that** said furnace (1), said separation system (11) and said furnace (9) respectively form the sides of a right angle of a right-angled triangle and its hypotenuse, said furnace (1) being vertical.

## Patentansprüche

1. Verfahren zur Pyrovergasung von Biomüll der Bauart, die a) einen Ofen, in dem die Pyrolyse der mit metallischen Massen, die auf hohe Temperatur zwischen 500 °C und 1100 °C gebracht werden, vermischten Abfälle stattfindet, wobei der Ofen einen Eingang für die Abfälle und für die metallischen Massen sowie einen Ausgang für die Pyrolysegase aufweist, b) ein System, das die Pyrorückstände und die metallischen Massen trennt, c) einen Ofen, der die Wiedererhitzung der metallischen Massen für einen neuen Zyklus der Pyrovergasung erlaubt, verwendet, **dadurch gekennzeichnet, dass** die metallischen Massen aus Toroiden (2) bestehen, die aus nichtrostendem Stahl hergestellt sind.

2. Verfahren nach Anspruch 1, **dadurch gekennzeichnet, dass** Toroide (2) Nickel und Kobalt enthalten.

3. Verfahren nach einem der Ansprüche 1 oder 2, **dadurch gekennzeichnet, dass** die Toroide (2) einen Innendurchmesser zwischen 15 und 100 mm inklusive und einen Außendurchmesser zwischen 50 und 150 mm inklusive haben.

4. Verfahren nach einem der Ansprüche 1 bis 3, **dadurch gekennzeichnet, dass** der Ausgang (6) der Pyrolysegase im unteren Abschnitt des Ofens (1) vorgesehen ist, wo die Pyrolyse stattfindet.

5. Verfahren nach Anspruch 4, **dadurch gekennzeichnet, dass** der Ausgang (6) mit einem System ausgestattet ist, das das Innere des Ofens (1) in leichten Unterdruck versetzt.

6. Verfahren nach einem der Ansprüche 1 bis 5, **dadurch gekennzeichnet, dass** an der Basis des Ofens (1), wo die Pyrolyse stattfindet, eine Vorrichtung (10) vorgesehen ist, die den Ausgangsdurchsatz der Toroide (2) und der Pyrolyserückstände reguliert.

7. Verfahren nach einem der Ansprüche 1 bis 6, **dadurch gekennzeichnet, dass** das System (11), das die Pyrorückstände und die Toroide (2) trennt, eine Archimedische Schraube (15) aufweist, die die Rückstände und die Toroide (2) von der Basis des Ofens (1) bis zur Basis des Ofen (9) befördert, wodurch die Wiedererwärmung der Toroide (2) erlaubt wird, wobei die Pyrorückstände zwischenzeitlich in einem Behälter (17) aufgefangen werden, indem sie ein Sieb (14) passieren, das unter der Schraube (15) angeordnet ist, und eine substantielle Länge derselben.

8. Verfahren nach einem der Ansprüche 1 bis 7, **dadurch gekennzeichnet, dass** der Ofen (9), der die Wiedererwärmung der Toroide (2) erlaubt, mit einem Brenner (8) und einer Archimedischen Schraube (18) ausgestattet ist, wodurch erlaubt wird, die mit Hilfe des Brenners (8) wiedererwärmten Toroide (2) auf eine höhere Ebene an der Spitze des Ofens (1) zu befördern.

9. Verfahren nach Anspruch 8, **dadurch gekennzeichnet, dass** Spiralen der Schraube (18) von der Welle (20), die die Schraube (18) antreibt, durch eine Hülse (21) getrennt sind, die die Welle (20) von den Spiralen der Schraube (18) thermisch isoliert.

10. Verfahren nach einem der Ansprüche 1 bis 9, **dadurch gekennzeichnet, dass** der Ofen (1), das Trennsystem (11) und der Ofen (9) jeweils die Seiten eines rechten Winkels eines rechtwinkligen Dreiecks und seine Hypotenuse bilden, wobei der Ofen (1) vertikal ist.
